# EUROPÄISCHE PATENTANMELDUNG

(11) **EP 2 090 838 A2**
(43) Veröffentlichungstag der Anmeldung: **19.08.2009**
(21) Anmeldenummer: 09001825.0
(22) Anmeldetag: 10.02.2009
(51) Int. Cl.: F24D 11/02, F24J 3/08

(54) **Wärmepumpenanlage**

(30) Priorität: 15.02.2008 DE 202008002131 U
(71) Anmelder: Schröder, Ulrich, 33415 Verl (DE); Henkenjohann, Walter, 33415 Verl (DE)
(72) Erfinder: Schröder, Ulrich, 33415 Verl (DE)
(74) Vertreter: Wiebusch, Manfred

(57) **Zusammenfassung**

Wärmepumpenanlage mit einem in das Erdreich (10) eingelassenen Wasserspeicher (12) als Primärwärmequelle einer Wärmepumpe (14), gekennzeichnet durch eine Zusatzpumpe (20), mit der Wasser aus einem zusätzlichen Wärmereservoir (22) in den Wasserspeicher (12) einleitbar ist, und eine Steuereinrichtung (18), die, wenn der Wärmevorrat im Wasserspeicher (12) erschöpft ist, die Zusatzpumpe (20) so lange aktiviert, bis mindestens ein Teil der Wassermenge im Wasserspeicher (12) ausgetauscht ist.

## Beschreibung

Die Erfindung betrifft eine Wärmepumpenanlage, mit einem in das Erdreich eingelassenen Wasserspeicher als Primärwärmequelle einer Wärmepumpe.

Eine Wärmepumpenanlage dieser Art wird in DE 20 2006 005 592 beschrieben. In dem Wärmespeicher wird während der warmen Jahreszeit Regenwasser aus Fallrohren von Dachentwässerungen oder sonstiges Oberflächenwasser sowie ggf. auch erwärmtes Abwasser und Wasser aus anderen Wärmequellen gesammelt, so daß ein Wärmevorrat angelegt wird, aus dem dann während der Heizperiode die Wärmepumpenanlage gespeist werden kann. Die Wärmepumpe entzieht in bekannter Weise dem Wasser in dem Wasserspeicher Wärme, beispielsweise um damit einer Heizungsanlage zu betreiben, wobei zugleich das Wasser in dem Wasserspeicher gekühlt wird. Die Wärmepumpe kann auch auf Vorrat arbeiten und die während verbrauchsarmer Zeiten entnommene Wärme in einem Puffer (z. B. einem Wasserbehälter) speichern.

Solange der Wärmebedarf nicht zu hoch ist, kann das Wasser in dem Wärmespeicher sich durch thermischen Kontakt mit dem umgebenden Erdreich wieder erwärmen, so daß normalerweise stets eine ausreichende Wärmemenge für die Wärmepumpe zur Verfügung steht.

Wenn jedoch während einer längeren Frostperiode der Wärmebedarf erhöht ist und gleichzeitig der Zustrom an Wärme aus dem Erdreich abnimmt, kann sich der Wärmevorrat in dem Wasserspeicher erschöpfen. Für solche Fälle ist bei einigen bekannten Wärmepumpenanlagen eine Zusatzheizung, beispielsweise eine elektrischer Heizstab vorgesehen, mit dem dann die fehlende Wärmemenge ergänzt wird. Der Betrieb dieser Zusatzheizung ist jedoch mit einem unerwünscht hohen Verbrauch an Primärenergie verbunden.

Aufgabe der Erfindung ist es, eine Wärmepumpenanlage der eingangs genannten Art zu schaffen, bei der der Einsatz einer mit Energie aus dem Stromnetz oder fossilen Brennstoffen beschriebenen Zusatzheizung vermindert oder ganz vermieden werden kann.

Diese Aufgabe wird erfindungsgemäß gelöst durch eine Zusatzpumpe, mit der Wasser aus einem zusätzlichen Wärmereservoir in den Wasserspeicher einleitbar ist, und eine Steuereinrichtung, die, wenn der Wärmevorrat im Wasserspeicher erschöpft ist, die Zusatzpumpe so lange aktiviert, bis mindestens ein Teil der Wassermenge im Wasserspeicher ausgetauscht ist.

Die Erfindung beruht auf der Überlegung, daß in vielen Häusern, die mit einer Wärmepumpenanlage ausgerüstet sind oder ausgerüstet werden sollen, ein bisher ungenutzter zusätzlicher Wärmevorrat zur Verfügung steht, beispielsweise in der Form eines Brunnens, der im Sommer für die Gartenbewässerung genutzt wird. Es kann sich jedoch auch um einen beliebigen anderen Wärmevorrat handeln, beispielsweise um ein Niedrigtemperatur-Fernwärmenetz, das mit Abwärme aus landwirtschaftlichen oder industriellen Prozessen betrieben wird und beispielsweise eine Mediumtemperatur von nur 20°C aufweist. Dieser Wärmevorrat braucht nicht so viel Energie zu liefern, daß eine Wärmepumpe die gesamte Heizperiode hindurch allein mit dieser Wärme betrieben werden könnte, er wird aber vielfach ausreichen, um in Spitzenbedarfszeiten die Wärme zu liefern, die bisher von der Zusatzheizung geliefert werden muß. In vielen Fällen, beispielsweise im Fall eines Brunnens, wird sich das zusätzliche Wärmereservoir auch seinerseits wieder aus der Umgebung regenerieren können, so daß dann auch mehrere in zeitlichem Abstand auftretende Kälteperioden überbrückt werden können.

Durch die Erfindung wird so ein Beitrag zur Verringerung der CO₂-Belastung der Atmosphäre geleistet, und sie hat dabei den Vorteil, daß sie oft kaum zusätzliche Installationskosten erfordert, beispielsweise dann, wenn ein Brunnen und eine Pumpe zum Abpumpen von Wasser aus diesem Brunnen bereits vorhanden sind.

Vorteilhafte Ausgestaltungen und Weiterbildungen der Erfindung sind in den Unteransprüchen angegeben.

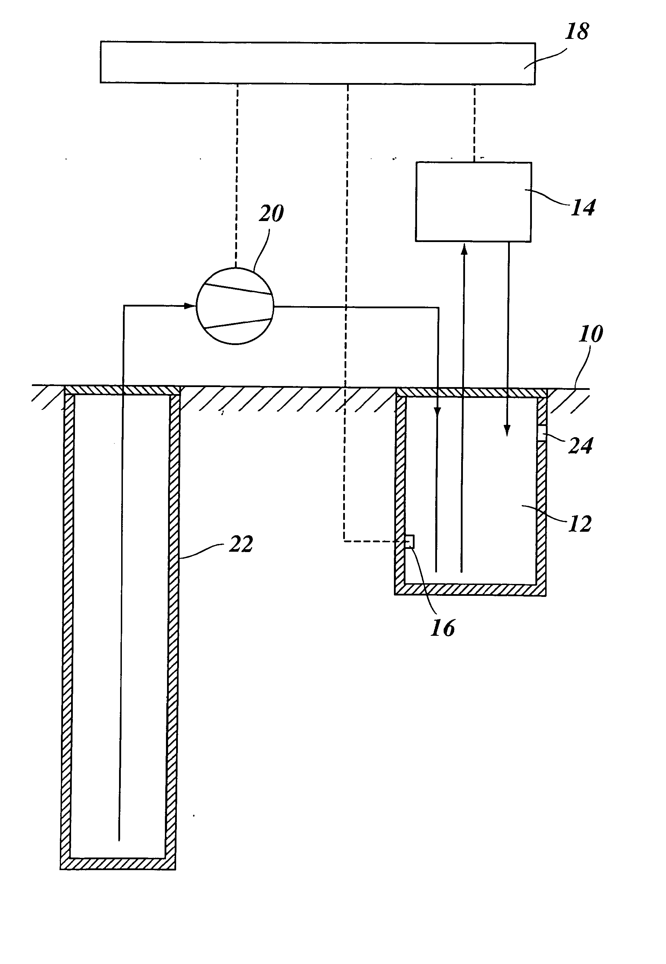

Im folgenden wird ein Ausführungsbeispiel anhand der Zeichnung näher erläutert.

Die einzige Zeichnungsfigur zeigt ein Blockdiagramm der erfindungsgemäßen Wärmepumpenanlage.

In das Erdreich 10 ist ein Wasserspeicher 12 eingelassen, in dem während der warmen Jahreszeit eine bestimmte Wassermenge gesammelt und gespeichert werden kann, so daß sie dann während der Heizperiode als Wärmespeicher zur Verfügung steht. Der Wasserspeicher 12 kann verschiedene nicht gezeigte Zuläufe aufweisen, aus denen er mit verhältnismäßig warmen Wasser gespeist wird, beispielsweise mit Regenwasser aus Dachentwässerungen, oder auch mit Abwässern oder Wasser, das durch Wärmekontakt mit Abwasser erwärmt wurde.

Eine Wärmepumpe 14, die beispielsweise zur Beheizung eines Gebäudes dient, ist in bekannter Weise so ausgebildet, daß sie Wärme aus dem Wasserspeicher 12 entnimmt und dabei das in diesem Wasserspeicher enthaltene Wasser kühlt, wie in der Zeichnung durch Pfeile angedeutet wird. Im gezeigten Beispiel wird das in dem Wasserspeicher 12 enthaltene Wasser in Bodennähe von der Wärmepumpe 14 angesaugt und, nachdem ihm die Wärme entzogen wurde, mit niedrigerer Temperatur wieder in den oberen Bereich des Wasserspeichers 12 zurückgeleitet. Es sind jedoch auch Ausführungsformen denkbar, bei denen das Wasser im Wasserspeicher 12 nur mittelbar mit dem Primärkreislauf der Wärmepumpe 14 in Kontakt steht. Beispielsweise können im Primärkreislauf der Wärmepumpe nicht gezeigte Heizschlangen vorgesehen sein, die in den Wänden des Wasserspeichers 12 verlegt sind.

Im Lauf der Heizperiode wird sich aufgrund des Betriebs der Wärmepumpe die Temperatur des Wasservorrats in dem Wasserspeicher 12 verringern, und wenn die mittlere Temperatur im Wasserspeicher 12 einen Wert von etwa 4° C unterschreitet, so stellt sich in dem Wasserspeicher eine Schichtung ein, bei der sich das wärmste und dichteste Wasser (mit +4° C) am Boden befindet, während die Temperatur nach oben hin abnimmt, ggf. auf 0° C oder sogar darunter.

Da aus dem umgebenden Erdreich Wärme in das Wasser im Wasserspeicher 12 nachströmen kann, wird sich bei nicht zu hohem Verbrauch das Temperaturprofil im Wasserspeicher 12 stabilisieren und die Höhe der Wasserschicht, in der die Temperatur beispielsweise +1° C beträgt, wird nur wenig schwanken. Wenn jedoch in einer längeren Kälteperiode der Wärmeentzug durch die Wärmepumpe 14 die Nachlieferung an Wärme aus dem Erdreich übersteigt, so wird diese Schicht mit der Temperatur von +1° C absinken und schließlich den Boden des Wasserspeichers 12 erreichen. In dem Wasserspeicher 12 ist deshalb in geeigneter Höhe ein Temperaturfühler 16 angeordnet, mit dem sich dieses Absinken der kälteren Wasserschicht erfassen läßt.

Auf diese Weise erfaßt der Temperaturfühler 16 einen Zustand, in dem der Wärmevorrat des Wasserspeichers 12 nahezu erschöpft ist. Eine elektronische Steuereinrichtung 18, die auch die Wärmepumpe 14 steuert, nimmt das Signal des Temperaturfühlers 16 auf und schaltet bei Erschöpfung des Wärmevorrats eine Zusatzpumpe 20 ein, mit der dann Wasser aus einem zusätzlichen Wärmereservoir 22, im gezeigten Beispiel aus einem Brunnen, in den Wasserspeicher 12 gepumpt wird.

Das Wasser aus dem Brunnen wird im allgemeinen eine Temperatur von +4° C oder mehr haben und wird deshalb in Bodennähe in den Wasserspeicher 12 eingeleitet, so daß es sich mit dem dort vorhandenen Wasser vermischt, so daß die Zone, in der die Wassertemperatur beispielsweise +1° C beträgt, wieder ansteigt. Dies kann wiederum vom Temperaturfühler 16 erfaßt werden, der daraufhin über die Steuereinrichtung 18 veranlaßt, daß die Pumpe 20 wieder stillgesetzt wird. Wahlweise ist es jedoch auch möglich, die Steuereinrichtung 18 so zu programmieren, daß sie die Pumpe 20 eingeschaltet hält, bis nahezu der gesamte Wasservorrat im Wasserspeicher 12 ausgetauscht ist.

In jedem Fall kann so die Wärmepumpe 14 weiter betrieben werden, ohne daß der Wärmevorrat im Wasserspeicher 12 vollständig erschöpft wird. Wenn die Außentemperaturen wieder steigen und somit der Verbrauch der Wärmepumpe 14 abnimmt und gleichzeitig der Zustrom von Wärme aus der Umgebung in den Wasserspeicher 12 zunimmt, kann sich der Wärmevorrat wieder regenerieren, so daß die Pumpe 20 dann für längere Zeit nicht mehr aktiviert zu werden braucht. In jedem Fall kann sich auch das zusätzliche Wärmereservoir 22 durch Zufluß von Wärme und/oder Wasser aus der Umgebung wieder regenerieren. In einer nächsten Kälteperiode wird deshalb wieder eine gewisse Reserve aus dem Wärmereservoir 22 zur Verfügung stehen.

Der Wasserspeicher 12 weist im gezeigten Beispiel einen Überlauf 24 auf, aus dem das oberflächennahe und entsprechend kalte Wasser abfließen kann, wenn wärmeres Wasser aus dem Wärmereservoir 22 zugepumpt wird. Wahlweise kann das überschüssige Wasser jedoch auch mit Hilfe der Wärmepumpe 14 abgepumpt werden, indem das in der Wärmepumpe gekühlte Wasser für eine gewisse Zeit nicht wieder in den Wasserspeicher 12 zurückgeleitet, sondern vielmehr in das Kanalnetz abgeleitet wird.

Sofern dem Wasser im Wasserspeicher 12 ein Frostschutzmittel zugesetzt ist, kann auch zugelassen werden, daß die Temperatur im Wasserspeicher 12 deutlich unter 0° C abnimmt.

## Patentansprüche

1. Wärmepumpenanlage mit einem in das Erdreich (10) eingelassenen Wasserspeicher (12) als Primärwärmequelle einer Wärmepumpe (14), **gekennzeichnet durch** eine Zusatzpumpe (20), mit der Wasser aus einem zusätzlichen Wärmereservoir (22) in den Wasserspeicher (12) einleitbar ist, und eine Steuereinrichtung (18), die, wenn der Wärmevorrat im Wasserspeicher (12) erschöpft ist, die Zusatzpumpe (20) so lange aktiviert, bis mindestens ein Teil der Wassermenge im Wasserspeicher (12) ausgetauscht ist.

2. Wärmepumpenanlage nach Anspruch 1, **dadurch gekennzeichnet, daß** das zusätzliche Wärmereservoir (22) ein Brunnen ist.

3. Wärmepumpenanlage nach Anspruch 1, **dadurch gekennzeichnet, daß** das zusätzliche Wärmereservoir ein Niedrigtemperatur-Fernwärmenetz ist.

4. Wärmepumpenanlage nach Anspruch 1, 2 oder 3, **dadurch gekennzeichnet, daß** an die Steuereinrichtung (18) ein im Wasserspeicher (12) angeordneter Temperaturfühler (16) zur Überwachung des Wärmevorrats im Wasserspeicher angeschlossen ist.
